# EUROPEAN PATENT APPLICATION

(11) **EP 4 015 345 A1**
(43) Date of publication of application: **22.06.2022**
(21) Application number: 20855184.6
(22) Date of filing: 17.07.2020
(51) Int. Cl.: B62B 3/00, G06K 17/00

(54) **INTELLIGENT INTERACTIVE MODULE AND TROLLEY**

(30) Priority: 16.08.2019 CN 201921336967 U
(71) Applicant: Lingdong Technology (Beijing) Co. Ltd, Beijing 100096 (CN)
(72) Inventor: ZHANG, Junkui, Beijing 100096 (CN); TANG, Yaming, Beijing 100096 (CN)
(74) Representative: Patentanwälte Bressel und Partner mbB
(86) International application number: PCT/CN2020/102787
(87) International publication number: WO 2021/031760

(57) **Abstract**

Disclosed is an intelligent interactive module, which is applicable to a trolley (10) comprising a stand (300) and a handle (400). The intelligent interactive module comprises a printing unit (510), a main body (520), a touch screen (530), a reading unit (540), and a control unit (550), wherein the printing unit (510) is disposed on the stand (300), the main body (520) is disposed on the stand (300) and adjacent to the handle (400), the touch screen (530) is disposed on the main body (520), the reading unit (540) is disposed in the main body (520), and the control unit (550) is disposed in the main body (520) and is electrically connected to the printing unit (510), the touch screen (530), and the reading unit (540). When the reading unit scans identification information of goods, the control unit receives a first signal from the reading unit, and controls the touch screen to display printed information corresponding to the goods; and when the touch screen receives an input instruction from a user, the control unit receives a second signal from the touch screen, and controls the printing unit to print goods information corresponding to the goods. In addition, the disclosure further discloses a trolley comprising the intelligent interactive module.

## Description

### TECHNICAL FIELD

This disclosure relates to an intelligent interactive module and a trolley, in particular relates to an intelligent interactive module that allows for printing of goods information during movement and a trolley.

### BACKGROUND ART

The logistics system is an indispensable element in business. Generally, when the logistics worker intends to dispatch goods to different destinations, it requires a deliveryman to get a picking list, push a trolley to a location of the goods according to information on the picking list to pick up the goods, and then push the trolley back to a centralized processing point responsible for printing goods information, where the information is printed and the goods are packaged, and finally the goods are dispatched. In the above steps, it takes a considerable amount of time to move to and from between the locations of the goods and the centralized processing point, which reduces the efficiency of goods dispatch. However, the common trolleys currently on the market lack an intelligent module capable of direct interaction with the deliveryman, and intelligent logistics vehicles for warehousing equipped with both automatic walking and navigation functions are extremely expensive, hence the above equipment cannot provide an effective solution to the above-mentioned problem.

### SUMMARY OF THE INVENTION

For this reason, this disclosure provides an intelligent interactive module capable of printing goods information during movement and a trolley to solve the above-mentioned problem.

In order to solve the above-mentioned problem, the disclosure discloses an intelligent interactive module, which is applicable to a trolley comprising a stand and a handle. The intelligent interactive module comprises a printing unit, a main body, a touch screen, a reading unit and a control unit, wherein the printing unit is disposed on the stand, the main body is disposed on the stand and adjacent to the handle, the touch screen is disposed on the main body, the reading unit is disposed in the main body, and the control unit is disposed in the main body and is electrically connected to the printing unit, the touch screen and the reading unit. When the reading unit scans identification information of goods, the control unit receives a first signal from the reading unit, and controls the touch screen to display printed information corresponding to the goods; and when the touch screen receives an input instruction from a user, the control unit receives a second signal from the touch screen, and controls the printing unit to print goods information corresponding to the goods.

In addition, this disclosure further discloses a trolley, which comprises a carrying platform, a plurality of wheels, a stand, a handle, and the above-mentioned intelligent interactive module. These wheels are arranged on the carrying platform, to which the stand is connected, the handle is connected to the stand, and the intelligent interactive module is arranged on the stand.

In summary, after pushing the trolley to the location of the goods, the user may scan the identification information of the goods via the reading unit of the intelligent interactive module and, after confirmation of the printed information, operate on the touch screen to print the goods information of the corresponding goods by means of the printing unit, which can save the time and the distance of carrying the goods further to the centralized processing point for printing and hence greatly improve the logistics efficiency.

### BRIEF DESCRIPTION OF DRAWINGS

FIG 1 is a perspective view of a trolley according to an embodiment of the disclosure;
FIG. 2 is a perspective view of an intelligent interactive module in FIG. 1;
FIG. 3 is a schematic diagram of internal components of a main body in FIG. 2; and
FIG. 4 is a further exploded view of the components in FIG. 3.

The reference signs are listed as follows:
10: trolley; 100: carrying platform; 200: wheel; 300: stand; 400: handle; 500: intelligent interactive module; 510: printing unit; 520: main body; 522: cover plate; 524: signal-shielding box; 525: wave-absorbing part; 526: metal part; 528: fixing part; 530: touch screen; 540: reading unit; 542: circuit board; 544: antenna; 550: control unit; 600: power module; 610: battery; 620: switch; B: back surface; D: bottom surface; O: opening; R: reading area; S: side.

### DETAILED DESCRIPTION OF EMBODIMENTS

The foregoing and further technical contents, features, and effects of the disclosure will be clearly presented in the following detailed description of the preferred embodiments in combination with exemplary drawings. It should be noted that the directional terms mentioned in the following embodiments, for example, up, down, left, right, front, back, etc., only refer to the directions of the exemplary drawings. Hence, the directional terms and connective terms used herein are for the purpose of explaining, rather than limiting the disclosure.

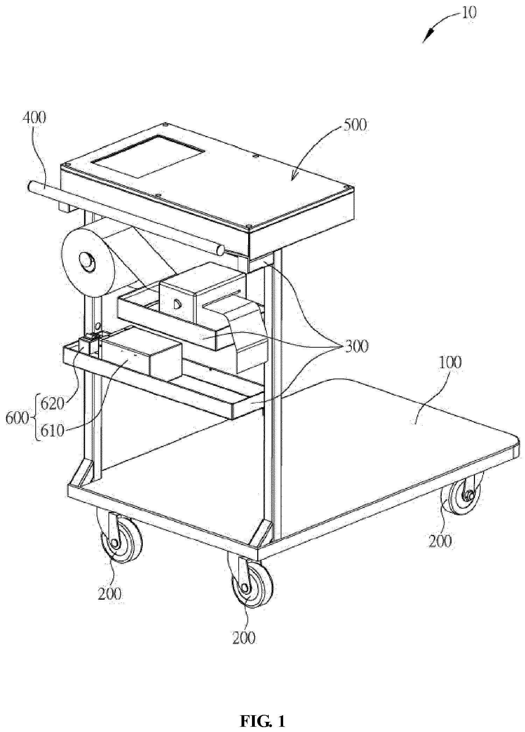

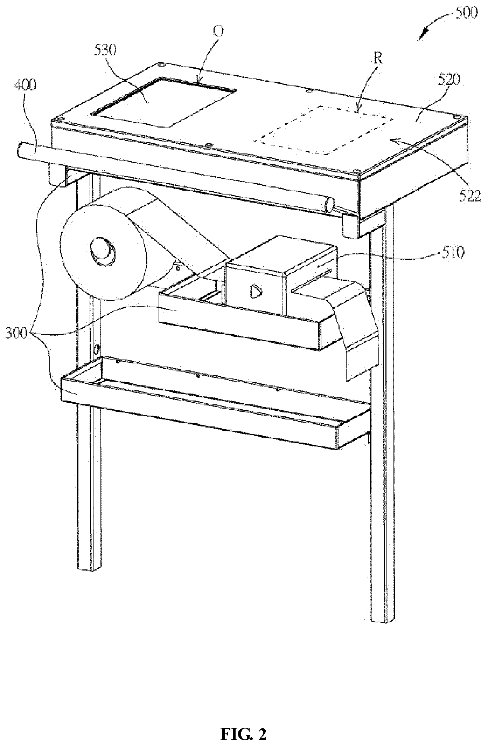

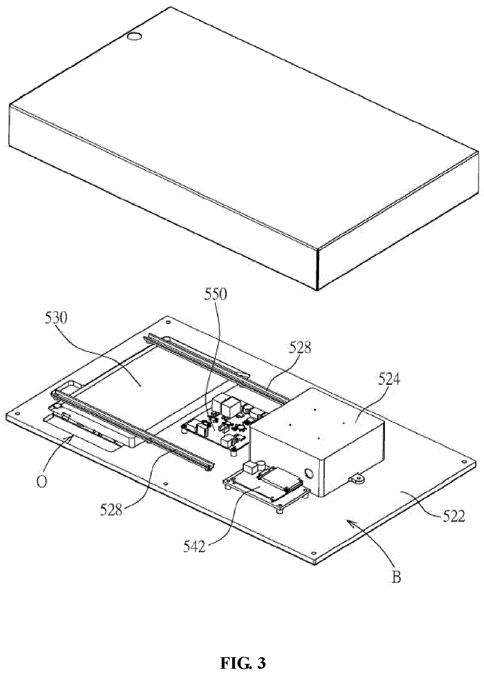

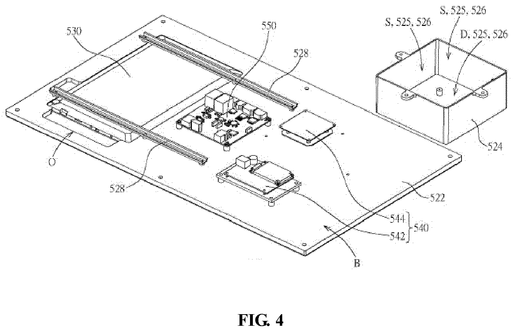

FIG. 1 is a perspective view of a trolley according to an embodiment of the disclosure. FIG. 2 is a perspective view of an intelligent interactive module in FIG. 1. FIG. 3 is a schematic diagram of internal components of a main body in FIG. 2. FIG. 4 is a further exploded view of the components in FIG. 3. Please refer to FIG. 1 to FIG. 4. A trolley 10 of this embodiment comprises a carrying platform 100, a plurality of wheels 200, a stand 300, a handle 400, an intelligent interactive module 500, and a power module 600. The wheels 200 are arranged on an underside of the carrying platform 100. The stand 300 is connected to the carrying platform 100 and has a height difference with the carrying platform 100, and the stand 300 is used for placement of the intelligent interactive module 500 and components of the power module 600. Three stands 300 are provided in total in this embodiment, but it is not limited thereto. The handle 400 is connected to the stand 300 for the user to hold and to push the trolley 10 to a destination. The intelligent interactive module 500 and the power module 600 are arranged on the stand 300.

To be specific, the intelligent interactive module 500 comprises a printing unit 510, a main body 520, a touch screen 530, a reading unit 540, and a control unit 550, wherein the printing unit 510 is disposed on the stand 300, the main body 520 is disposed on the stand 300 and adjacent to the handle 400 to facilitate user operations, the touch screen 530 is disposed on the main body 520, the reading unit 540 is disposed in the main body 520, the control unit 550 is disposed in the main body 520 and is electrically connected to the printing unit 510, the touch screen 530 and the reading unit 540, and the power module 600 is electrically connected to the printing unit 510, the touch screen 530, the reading unit 540 and the control unit 550.

Furthermore, the main body 520 includes a cover plate 522, wherein an opening O is formed on the cover plate 522, and the touch screen 530 is arranged on the cover plate 522 and is exposed through the opening O. In addition, the main body 520 further includes fixing parts 528, the number of which is two and which are arranged on a back surface B of the cover plate 522 in order to fix the touch screen 530 and cables for connecting the control unit 550. In other words, the touch screen 530 is fixed to the cover plate 522 by the fixing parts 528, so that the touch screen 530 can be prevented from protruding from the main body 520 while providing user operations, thereby reducing the risk of collision and damage to the touch screen 530. Apart from that, the reading unit 540 and the control unit 550 are fixed to the back surface B of the cover plate 522, and in this embodiment, the reading unit 540 is a radio frequency identification (RFID) reader, which can read identification information of goods within a certain distance and corresponds to a reading area R on the cover plate 522. Therefore, when the user aligns the identification information of the goods to the reading area R, the reading unit 540 can scan the identification information and transmit a signal to the control unit 550.

In order to improve the efficiency of goods dispatch in logistics, the trolley 10 of this embodiment has a function of printing goods information during movement. To be specific, after pushing the trolley 10 to a location of the goods, the user may align the identification information of the goods with the reading area R of the cover plate 522 to allow the reading unit 540 to scan the identification information of the goods. When scanning the identification information of the goods, the reading unit 540 transmits a first signal including the identification information to the control unit 550, and at this time the control unit 550 receives the first signal from the reading unit 540 and controls the touch screen 530 to display printed information corresponding to the goods for the user to determine whether to print the goods information for goods packaging.

It is worth mentioning that, in order to avoid interference in signals of the reading unit 540 during the scanning process, the intelligent interactive module 500 has corresponding protective measures. Please refer to FIG. 3 and FIG. 4. In this embodiment, the reading unit 540 comprises a circuit board 542 and an antenna 544, and the reading unit 540 scans the identification information located above the reading area R through the antenna 544 to complete scanning. Furthermore, the main body 520 also includes a signal-shielding box 524, wherein the signal-shielding box 524 is fixed on the back surface B, and the antenna 544 is arranged in the signal-shielding box 524. Specifically, the signal-shielding box 524 includes a bottom surface D and a plurality of sides S connected to the back surface B and to the bottom surface D, and the signal-shielding box 524 further includes wave-absorbing parts 525 and metal parts 526 disposed on the bottom surface D and the sides S for absorbing electromagnetic waves that interfere with radio frequency signals and shielding noises. In this embodiment, the material of the wave-absorbing parts 525 is graphene, or a substance capable of absorbing electromagnetic wave energy that is projected onto the antenna 544, such as graphite carbon black, carbon fiber, carbon nanotube, iron oxide, nano-magnetic iron material, silicon carbide or conductive polymer, etc. The metal parts 526 are copper foil or other thin metal parts that can shield electromagnetic waves or prevent electrostatic interferences. Through the above configuration, interfering noises received by the antenna 544 during the scanning process can be reduced and the scanning efficiency can be improved.

After confirming that the printed information displayed on the touch screen 530 is correct, the user may operate on the touch screen 530 to execute an input instruction for printing the goods. Here, when the touch screen 530 receives the input instruction from the user, the control unit 550 receives a second signal from the touch screen 530 to confirm that the goods are to be printed, and controls the printing unit 510 to print goods information corresponding to the goods. After the goods information is successfully printed, the user may paste a label paper with the goods information printed thereon to the corresponding goods to complete the packaging process, and then dispatch the goods.

In addition, in order to avoid power loss after the printing is completed or when there is no need to operate the intelligent interactive module 500, the power module 600 comprises a battery 610 and a switch 620, wherein the battery 610 is used for providing electric power to the printing unit 510, the touch screen 530, the reading unit 540 and the control unit 550, and the switch 620 is used for turning on or off electric power. Therefore, the user can turn off the switch 620 after completing printing to stop the electric power supply by the battery 610 to the components of the intelligent interactive module 500, so as to achieve the purpose of saving power.

The above descriptions are only the preferred embodiments of this disclosure, which do not intend to limit the disclosure. For the skilled in the art, the disclosure may have various modifications and changes. Any modification, equivalent substitution, improvement, etc. within the spirit and principles of this disclosure should be included in the scope of protection of the disclosure.

## Claims

1. An intelligent interactive module, which is applicable to a trolley comprising a stand and a handle, wherein the intelligent interactive module comprises:
a printing unit disposed on the stand;
a main body disposed on the stand and adjacent to the handle;
a touch screen disposed on the main body;
a reading unit disposed in the main body; and
a control unit disposed in the main body and electrically connected to the printing unit, the touch screen, and the reading unit;
wherein when the reading unit scans identification information of goods, the control unit receives a first signal from the reading unit, and controls the touch screen to display printed information corresponding to the goods;
wherein when the touch screen receives an input instruction from a user, the control unit receives a second signal from the touch screen, and controls the printing unit to print goods information corresponding to the goods.

2. The intelligent interactive module according to claim 1, wherein the main body comprises a cover plate, on which an opening is formed, the touch screen is arranged on the cover plate and is exposed through the opening, and the reading unit and the control unit are fixed to a back surface of the cover plate.

3. The intelligent interactive module according to claim 2, wherein the reading unit comprises a circuit board and an antenna, the main body further includes a signal-shielding box fixed to the back surface, and the antenna is arranged in the signal-shielding box.

4. The intelligent interactive module according to claim 3, wherein the signal-shielding box comprises a bottom surface and a plurality of sides connected to the back surface and the bottom surface, and the signal-shielding box further comprises:
a wave-absorbing part disposed on the bottom surface and the plurality of sides; and
a metal part disposed on the bottom surface and the plurality of sides.

5. The intelligent interactive module according to claim 4, wherein a material of the wave-absorbing part is graphene, graphite carbon black, carbon fiber, carbon nanotube, iron oxide, nano-magnetic iron material, silicon carbide, or conductive polymer, and the metal part is copper foil.

6. The intelligent interactive module according to claim 2, wherein the main body further comprises a fixing part, by means of which the touch screen is fixed to the cover plate.

7. The intelligent interactive module according to claim 1, wherein the reading unit is a radio frequency reader.

8. A trolley, wherein the trolley comprises:
a carrying platform;
a plurality of wheels arranged on the carrying platform;
a stand connected to the carrying platform;
a handle connected to the stand; and
the intelligent interactive module according to any one of claims 1-7, which is arranged on the stand.

9. The trolley according to claim 8, wherein the trolley further includes a power module, which is arranged on the stand and is electrically connected to the printing unit, the touch screen, the reading unit and the control unit.

10. The trolley according to claim 9, wherein the power module comprises a battery and a switch, wherein the battery is used for supplying electric power to the printing unit, the touch screen, the reading unit and the control unit, and the switch is used for turning on or off the electric power.
